# EUROPÄISCHE PATENTSCHRIFT

(11) **EP 2 615 660 B1**
(45) Veröffentlichungstag und Bekanntmachung des Hinweises auf die Patenterteilung: **01.10.2014**
(21) Anmeldenummer: 13150989.5
(22) Anmeldetag: 11.01.2013
(51) Int. Cl.: H01M 2/04, H01M 2/12

(54) **Deckelteil eines elektrochemischen Akkumulators und Akkumulator mit einem solchen Deckelteil**
Lid section of an electrochemical battery and battery with such a lid section
Partie de couvercle d'un accumulateur électrochimique et accumulateur doté d'une telle partie de couvercle

(30) Priorität: 12.01.2012 DE 102012100227
(43) Veröffentlichungstag der Anmeldung: 17.07.2013
(73) Patentinhaber: Johnson Controls Autobatterie GmbH & Co. KGaA, 30419 Hannover (DE)
(72) Erfinder: Streuer, Peter, 30559 Hannover (DE); Ledoux, Anne-Laure, 30855 Langenhagen (DE); Straßburg, Karsten, 30167 Hannover (DE); Schwab, Julius Martin, 30449 Hannover (DE)
(74) Vertreter: Meissner, Bolte & Partner GbR

(56) Entgegenhaltungen:
- EP-A1- 0 462 403
- EP-A1- 0 570 703
- DE-A1- 1 596 097
- US-A- 6 045 940

## Beschreibung

Die Erfindung betrifft ein Deckelteil eines elektrochemischen Akkumulators gemäß dem Anspruch 1. Die Erfindung betrifft außerdem einen Akkumulator mit einem derartigen Deckelteil gemäß dem Anspruch 14.

Allgemein betrifft die Erfindung elektrochemische Akkumulatoren, wie z. B. Blei-Säure-Akkumulatoren. Derartige Akkumulatoren weisen, vereinfacht ausgedrückt, ein aus einem Gehäuseunterteil und einem darauf befestigtem Deckelteil gebildetes Gehäuse auf. In dem Gehäuseunterteil sind im Falle mehrzelliger Akkumulatoren eine oder mehrere Zellwände angeordnet, durch die voneinander getrennte Zellgefäße gebildet werden. In den Zellgefäßen werden Elektrodenplattensätze sowie der Elektrolyt, z. B. die Säure, angeordnet. Bei solchen Akkumulatoren ist es erforderlich, dass ein Zugang zum Gehäuseinneren auch nach Abschluss der Herstellung ermöglicht wird. Daher ist es bekannt, in einem Deckelteil eines solchen elektrochemischen Akkumulators Einfüllöffnungen für flüssigen Elektrolyten vorzusehen. Die Einfüllöffnungen werden durch dafür konstruierte Verschlussstopfen verschlossen, wenn der Einfüllvorgang abgeschlossen ist und der Akkumulator im praktischen Betrieb verwendet werden soll.

Ein elektrochemischer Akkumulator ist z. B. aus der WO 2010/023316 A1 bekannt.

Die äußeren Abmessungen und die Lage bestimmter Komponenten solcher Akkumulatoren sind durch verschiedene Normen zumindest in Europa vereinheitlicht, z.B. durch die DIN EN 50342-2. Allerdings besteht inzwischen auch ein Bedarf an elektrochemischen Akkumulatoren, die kleinere Abmessungen aufweisen als die durch die Normen vorgegebenen Mindestmaße.

Der Erfindung liegt daher die Aufgabe zu Grunde, ein Deckelteil eines elektrochemischen Akkumulators anzugeben, mit dem ein elektrochemischer Akkumulator in einer Baugröße ermöglicht wird, der kleiner ist als die kleinsten normgemäßen Akkumulatoren, jedoch ansonsten soweit möglich die gleichen Vorteile bei der Herstellung und bei der Anwendung bietet. Ferner soll ein entsprechender Akkumulator angegeben werden.

Diese Aufgabe wird gemäß Anspruch 1 gelöst durch ein Deckelteil eines elektrochemischen Akkumulators, das dazu eingerichtet ist, eine obere Abdeckung des Gehäuses des Akkumulators zu bilden, wobei das Deckelteil mehrere mit Verschlussstopfen zu verschließende Einfüllöffnungen zum Einfüllen von flüssigem Elektrolyten in das Gehäuse aufweist, wobei die Einfüllöffnungen in wenigstens zwei nebeneinander liegenden Reihen versetzt zueinander angeordnet sind. Die zueinander versetzte Anordnung der Einfüllöffnungen ermöglicht es vorteilhaft, einen elektrochemischen Akkumulator in Baugrößen unterhalb der durch die DIN EN 50342-2 vorgegebenen Mindestabmessungen zu bauen, der ansonsten aber alle übrigen Merkmale der Norm erfüllt. Insbesondere können die Einfüllöffnungen die von bisherigen, größeren Akkumulatoren her bekannten Maße aufweisen, so dass auch alle übrigen Komponenten, wie Verschlussstopfen, Zündschutzfritteneinsatz und Formationsflaschen weiter verwendet werden können. Daher sind weder im Bereich der Produktion solcher Akkumulatoren mit geringeren Baugrößen noch bei der späteren Wartung grö-ßere Änderungen vorzunehmen. Vielmehr können vorhandene Komponenten weiterverwendet werden, was eine kostengünstige Herstellung und Wartung solcher kleinbauenden Akkumulatoren ermöglicht.

Das Deckelteil kann insbesondere als so genannter Doppeldeckel ausgebildet sein, mit einem oberen und einem unteren Deckelbauteil, zwischen denen einer oder mehrere Entgasungskanäle verlaufen.

Gemäß einer vorteilhaften Weiterbildung der Erfindung sind die Verschlussstopfen verschiedener Reihen von Einfüllöffnungen quer zur Erstreckungsrichtung der Reihen betrachtet überlappend angeordnet, wenn die Verschlussstopfen in die Einfüllöffnungen eingesetzt sind. Entsprechend sind dann bestimmte äußere Abmessungen der Einfüllöffnungen, in die die Verschlussstopfen eingesetzt werden, quer zur Erstreckungsrichtung der Reihen betrachtet überlappend angeordnet. Dies ermöglicht eine besonders dicht gepackte Anordnung von Einfüllöffnungen und Verschlussstopfen in dem Deckelteil. Hiermit wird eine größere Packungsdichte der Einfüllöffnungen und Verschlussstopfen erreicht, verglichen mit bekannten Akkumulatoren. Insbesondere weisen die Einfüllöffnungen einer jeweiligen Reihe einen Abstand derart voneinander auf, dass Verschlussstopfen verschiedener Reihen von Einfüllöffnungen quer zur Erstreckungsrichtung der Reihen betrachtet überlappend angeordnet werden können.

Gemäß einer vorteilhaften Weiterbildung der Erfindung sind die Verschlussstopfen verschiedener Reihen von Einfüllöffnungen in Erstreckungsrichtung der Reihen betrachtet überlappend angeordnet, wenn die Verschlussstopfen in die Einfüllöffnungen eingesetzt sind. Entsprechend sind dann bestimmte äußere Abmessungen der Einfüllöffnungen, in die die Verschlussstopfen eingesetzt werden, in Erstreckungsrichtung der Reihen betrachtet überlappend angeordnet. Dies ermöglicht eine weitere Steigerung der Packungsdichte der Einfüllöffnungen und Verschlussstopfen in dem Deckelteil.

Gemäß einer vorteilhaften Weiterbildung der Erfindung ist das Deckelteil eingerichtet zur Anbringung auf einem Gehäuseunterteil, das eine Vielzahl von sich quer zur Erstreckungsrichtung der Reihen der Einfüllöffnungen längs erstreckenden Zellwände aufweist, durch die in einer einzigen Reihe angeordnete, voneinander getrennte Zellgefäße in dem Gehäuseunterteil gebildet sind. Hierdurch wird eine dicht gepackte Anordnung der Einfüllöffnungen und Verschlussstopfen in dem Deckelteil einerseits bei zugleich darauf angepasster Anordnung der Zellgefäße in dem Gehäuseunterteil ermöglicht. Die Zellgefäße können in bekannter Art in einer einzigen Reihe nebeneinander in dem Gehäuseunterteil angeordnet sein und im Wesentlichen quaderförmig geformt sein, so dass übliche Elektrodenplattesätze ohne größere Modifikationen darin angeordnet werden können.

Gemäß einer vorteilhaften Weiterbildung der Erfindung sind die Einfüllöffnungen mit einem oder mehreren in dem Deckelteil verlaufenden Entgasungskanälen verbunden, wobei der oder die Entgasungskanäle in eine oder mehrere Gasauslassöffnungen des Deckelteils münden, die für ein Auslassen sich im Akkumulatorinneren bildender Gase über den oder die Entgasungskanäle eingerichtet sind. Dies hat den Vorteil, dass die bei elektrochemischen Akkumulatoren erforderlichen Entgasungsmöglichkeiten kompakt in dem Deckelteil untergebracht werden können und keine gesonderten baulichen Maßnahmen erforderlich sind.

Gemäß einer vorteilhaften Weiterbildung der Erfindung weist ein Entgasungskanal einen runden, ovalen oder rechteckigen Querschnitt auf.

Gemäß einer vorteilhaften Weiterbildung der Erfindung verläuft der Entgasungskanal bzw. die Entgasungskanäle im Wesentlichen zentral durch die mit dem Entgasungskanal bzw. den Entgasungskanälen verbundenen Einfüllöffnungen. Dies hat den Vorteil, dass die Öffnungen, die an den Schnittflächen zwischen den Entgasungskanälen und den Einfüllöffnungen gebildet sind, relativ groß sind und hierdurch weniger leicht durch Verschmutzungseinflüsse verstopfen können. Der Entgasungskanal muss dabei nicht unbedingt exakt zentral durch die Einfüllöffnungen verlaufen, es ist aber vorteilhaft, wenn die Abweichung von der Mitte der Einfüllöffnung geringer ist als 20 % des Durchmessers der Einfüllöffnung.

Gemäß einer vorteilhaften Weiterbildung der Erfindung sind Einfüllöffnungen verschiedener Reihen über einen gemeinsamen Entgasungskanal miteinander verbunden. Hiermit entfällt das Erfordernis, individuelle, separate Entgasungskanäle für die Reihen von Einfüllöffnungen vorzusehen, was bei bestimmten Deckelkonstruktionen vorteilhaft ist. Der gemeinsame Entgasungskanal kann bezüglich seiner Mittelachse symmetrisch zwischen den Reihen der Einfüllöffnungen angeordnet sein, oder auch leicht unsymmetrisch. Gemäß einer vorteilhaften Weiterbildung der Erfindung schneidet der gemeinsame Entgasungskanal die damit verbundenen Einfüllöffnungen tangential. Der gemeinsame Entgasungskanal kann dann in einer Gasauslassöffnung enden, z. B. einem Aufnahmeraum für einen Zündschutzfritteneinsatz.

Gemäß einer vorteilhaften Weiterbildung der Erfindung weisen unterschiedliche Reihen von Einfüllöffnungen jeweils eigene durchgehende Entgasungskanäle auf, die in separaten Entgasungsöffnungen münden. Die Entgasungsöffnungen können dabei direkt die Gasauslassöffnungen bilden oder in eine gemeinsame Aufnahmekammer münden, die dann die Gasauslassöffnung bildet. Die gemeinsame Aufnahmekammer kann insbesondere als Aufnahmekammer für einen Zündschutzfritteneinsatz ausgebildet sein. Die jeweils eigenen durchgehenden Entgasungskanäle sind vorteilhaft separat, d. h. getrennt voneinander ausgebildet.

Der Zündschutzfritteneinsatz kann z. B. als einsteckbarer Stopfen mit einer Zündschutzfritte aus flammenhemmendem Material ausgebildet sein.

Gemäß einer vorteilhaften Weiterbildung der Erfindung weisen benachbarte Reihen von Einfüllöffnungen jeweils eigene, benachbarte Entgasungskanäle auf, die in einem Abstand voneinander verlaufen, der nicht größer ist als der Durchmesser einer Aufnahmekammer für einen Zündschutzfritteneinsatz. Dies hat den Vorteil, dass keine gesonderten Kanäle oder mehrere getrennte Gasauslassöffnungen, die jeweils mit eigenen Zündschutzfritteneinsätzen zu versehen wären, erforderlich sind. Die Entgasungskanäle können dabei in einer vorteilhaften Weiterbildung geradlinig verlaufend ausgebildet sein.

Gemäß einer vorteilhaften Weiterbildung der Erfindung ist die Aufnahmekammer für einen Zündschutzfritteneinsatz als längliche Kammer ausgebildet, deren Breite größer als die Höhe ist und deren Breite zudem größer als der Durchmesser der einzusetzenden Zündschutzfritte ist. Die Größen Breite und Höhe beziehen sich auf das von außen am Deckelteil sichtbare Profilbild der Aufnahmekammer, aber nicht auf deren Tiefenerstreckung ins Innere des Deckelteils. Diese Weiterbildung hat den Vorteil, dass mit einem einzigen Zündschutzfritteneinsatz auch dann die Aufnahmekammer verschlossen werden kann, wenn die Abstände der Entgasungskanäle voneinander größer sind als der Durchmesser der einzusetzenden Zündschutzfritte.

Gemäß einer vorteilhaften Weiterbildung der Erfindung verlaufen benachbarte Entgasungskanäle parallel zueinander. Insbesondere kann vorgesehen sein, dass die Entgasungskanäle in gerader Richtung parallel zueinander verlaufen.

Die eingangs genannte Aufgabe wird ferner gemäß Anspruch 14 gelöst durch einen Akkumulator mit einem Deckelteil der zuvor beschriebenen Art, dass auf einem Gehäuseunterteil des Akkumulators befestigt ist. Die Befestigung kann z. B. durch Laser-Durchlichtschweißen, Spiegelschweißen oder andere Verbindungstechniken für Kunststoffteile erfolgen. In einer vorteilhaften Ausgestaltung ist das Deckelteil und/oder das Gehäuseunterteil aus Kunststoff hergestellt, z. B. aus Polypropylen.

Gemäß einer vorteilhaften Ausgestaltung der Erfindung ist der Akkumulator als mindestens sechszelliger Akkumulator ausgebildet, insbesondere als sechszelliger oder zwölfzelliger Akkumulator.

Der Akkumulator kann auch als AGM-Akkumulator ausgebildet sein, wobei AGM für Absorptive Glass Mat steht. Bei solchen Akkumulatoren ist der flüssige Elektrolyt in einem faserartigen Material gebunden.

Die Erfindung wird nachfolgend anhand von Ausführungsbeispielen unter Verwendung von Zeichnungen näher erläutert.

Es zeigen
- Figur 1: - ein Deckelteil in einer ersten Ausführungsform in verschiedenen Ansichten und

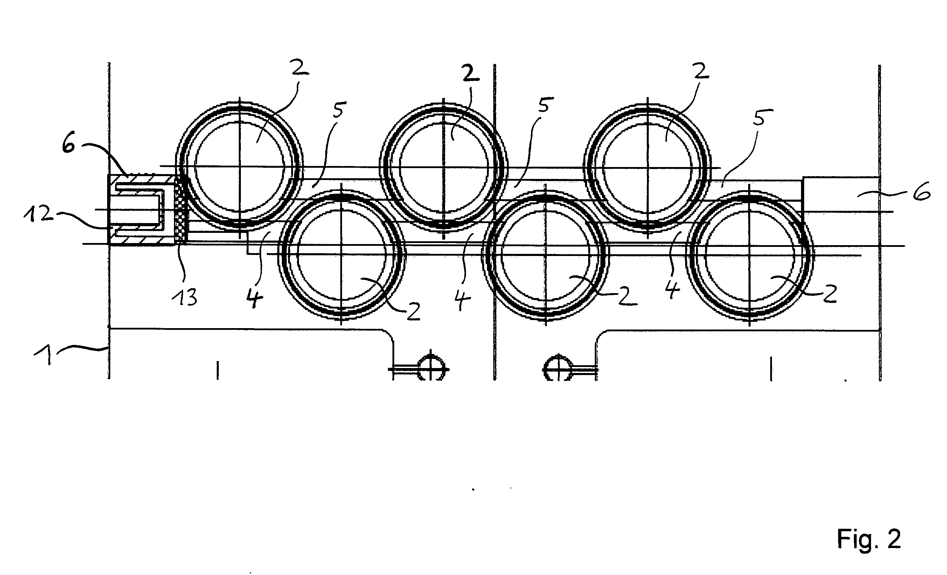

- Figur 2: - einen Ausschnitt aus Ansicht A von Figur 1 in vergrößerter Detaildarstellung und
- Figur 3: - ein auf ein Gehäuseunterteil aufgesetztes Deckelteil in einer Draufsicht auf das Deckelteil und
- Figur 4: - eine Seitenansicht eines Deckelteils und eines Gehäuseunterteils und
- Figur 5: - eine zweite Ausführungsform eines Deckelteils in verschiedenen Ansichten.

In den Figuren werden gleiche Bezugszeichen für einander entsprechende Elemente verwendet.

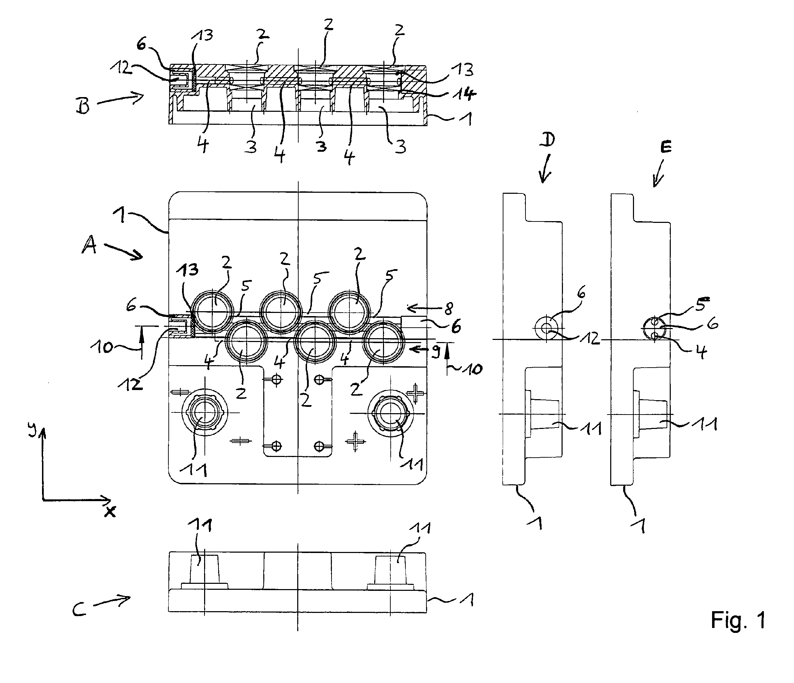

Die Figur 1 zeigt eine erste Ausführungsform eines Deckelteils 1 in verschiedenen Ansichten. In Ansicht A ist das Deckelteil in einer Draufsicht dargestellt, die sichtbar ist, wenn auf die Oberseite eines Akkumulators geblickt wird. Die Ansicht B zeigt einen Schnitt entlang der durch die Pfeile 10 angegebenen Schnittlinie. Die Ansicht C zeigt eine Seitenansicht in y-Richtung gemäß dem dargestellten Koordinatensystem. Die Ansichten D und E zeigen jeweils eine Seitenansicht in x-Richtung, wobei in der Ansicht D ein Zündschutzfritteneinsatz in einer Aufnahmekammer angeordnet ist und in der Ansicht E die Aufnahmekammer ohne den Zündschutzfritteneinsatz erkennbar ist.

Das Deckelteil 1 weist sechs Entgasungsöffnungen 2, 3 auf, die jeweils mit Verschlussstopfen (nicht dargestellt) zu verschließen sind. Es können dabei übliche Verschlussstopfen, die auch für größere Bauformen von Akkumulatoren verwendet werden, eingesetzt werden. In dem Deckelteil 1 verlaufen in x-Richtung ein erster Entgasungskanal 4 und parallel dazu ein zweiter Entgasungskanal 5. Der erste Entgasungskanal 4 verläuft durch die unteren drei Einfüllöffnungen 2, 3 hindurch, der zweite Entgasungskanal 5 verläuft durch die oberen drei Einfüllöffnungen hindurch. Wie insbesondere in der Ansicht B erkennbar ist, verlaufen die Entgasungskanäle 4, 5 zwischen der Oberseite und der Unterseite des Deckelteils 1. Die Verschlussstopfen weisen jeweils eine obere Dichtung und eine untere Dichtung auf, z. B. in der Art eines O-Rings. Erkennbar sind die Sitzflächen 13 und 14 für die obere und die untere Dichtung. Hierdurch werden die Entgasungskanäle 4, 5 sowohl gegenüber dem oberen und als auch gegenüber dem unteren Deckelbauteil abgedichtet. In den Verschlussstopfen sind Gaskanäle vorgesehen, z. B. in der Art eines Labyrinths, durch die auch bei in eine Entgasungsöffnung 2, 3 eingesetztem Verschlussstopfen Gas aus dem Inneren des Akkumulators durch die Einfüllöffnungen 2, 3 in die Entgasungskanäle 4, 5 gelangen kann. Um ein unerwünscht starkes Austreten flüssiger Säure zu vermeiden, können die Verschlussstopfen nach dem Siphon-Prinzip ausgebildet sein, so dass nur geringe, begrenzte Mengen von Säure bei einem Kippen des Akkumulators in die Entgasungskanäle 4, 5 gelangen können.

Die Entgasungskanäle 4, 5 enden jeweils auf der linken und der rechten Seite des Deckelteils 1 in Gasauslassöffnungen 6, die zugleich als Aufnahmekammern für einen Zündschutzfritteneinsatz 12 ausgebildet sind. Ein solcher Zündschutzfritteneinsatz 12 kann jeweils in beide Aufnahmekammern 6 oder, je nach gewünschter Anwendung des Akkumulators, nur in eine der Aufnahmekammern 6 eingesetzt werden. Die andere Aufnahmekammer 6 wird dann komplett verschlossen, z. B. durch einen entsprechenden Verschlussstopfen.

Der Zündschutzfritteneinsatz 12 kann als einsteckbarer Stopfen ausgebildet sein. Er weist eine Zündschutzfritte 13 aus flammenhemmendem Material auf.

Erkennbar ist in der Figur 1 außerdem, dass das Deckelteil 1 zwei Anschlusspole 11 aufweist, wie bei derartigen Akkumulatoren üblich. Die Figur 1 sowie die weiteren Figuren zeigen beispielhaft einen sechszelligen Akkumulator. Die Erfindung eignet sich aber ebenso für Akkumulatoren mit niedrigeren oder höheren Zellenzahlen.

Wie insbesondere in der Ansicht A erkennbar ist, sind die zwei Reihen 8, 9 der Einfüllöffnungen derart versetzt zueinander angeordnet, dass sich eine dichtere Anordnung in X-Richtung ergibt als bei einer vollständig einreihigen Anordnung, wie z. B. in Figur 1 von WO 2010/023316 A1 abgebildet.

Die Figur zeigt den mittleren Bereich des Deckelteils 1 aus Ansicht A von Figur 1 ausschnittsweise in vergrößerter Darstellung, so dass die Lage der Entgasungsöffnungen sowie der Entgasungskanäle 4, 5 noch deutlicher erkennbar ist.

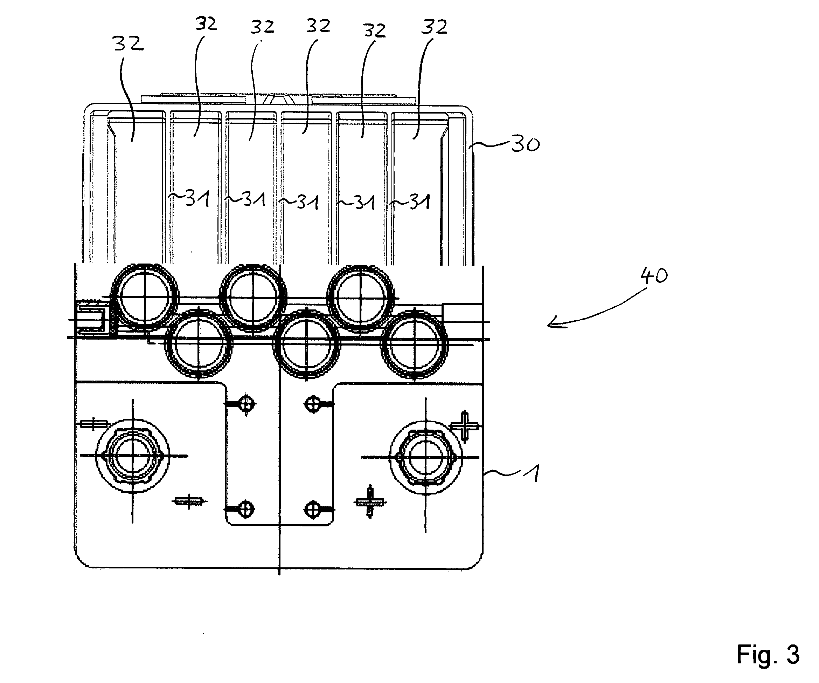

Die Figur 3 zeigt einen Akkumulator 40 in einer Draufsicht, d. h. in einer Ansicht entsprechend der Ansicht A von Figur 1, wobei das Deckelteil 1 nur teilweise dargestellt ist und daher den Blick auf ein darunter angeordnetes Gehäuseunterteil 30 teilweise freigibt. Wie erkennbar ist, weist das Gehäuseunterteil 30 fünf im Inneren verlaufende Zellwände 31 auf, durch die, zusammen mit den Außenwänden des Gehäuseteils 30, sechs Zellgefäße 32 gebildet werden, entsprechend der Zellenanzahl des Akkumulators 40. Die Einfüllöffnungen 2, 3 sind jeweils oberhalb eines Zellraums 32 angeordnet, so dass der jeweilige Zellraum über seine Einfüllöffnung 2, 3 mit flüssigem Elektrolyten befüllt werden kann.

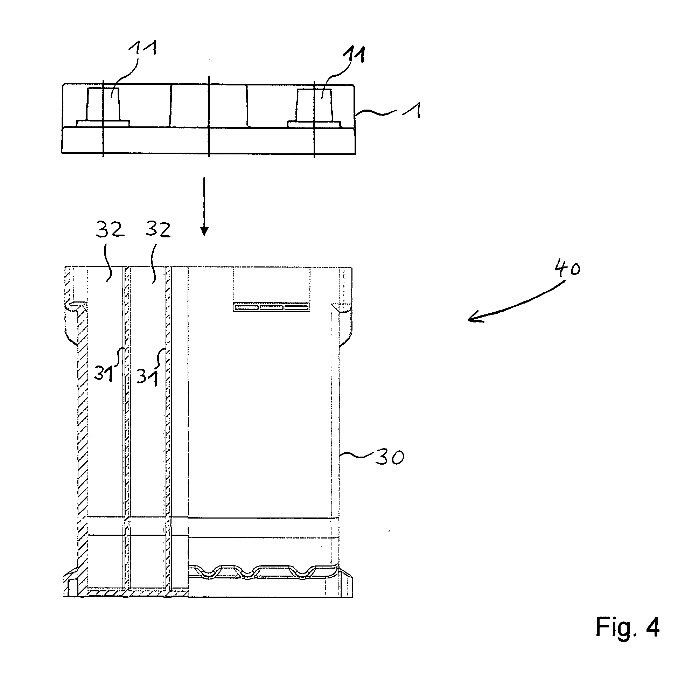

Die Figur 4 zeigt das Deckelteil 1 gemäß der Ansicht C von Figur 1 sowie in vergleichbarer Ansicht das Gehäuseunterteil 30 des Akkumulators 40, bevor das Deckelteil 1 auf dem Gehäuseunterteil 30 befestigt ist. Erkennbar sind wiederum die Zellwände 31 und die dazwischen gebildeten Zellgefäße 32.

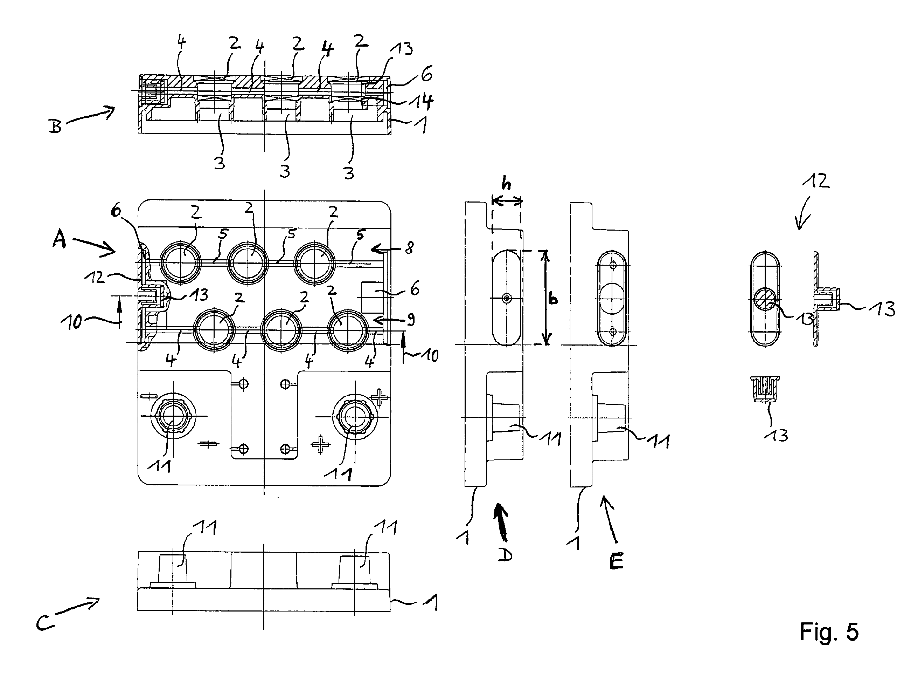

Die Figur 5 zeigt eine zweite Ausführungsform eines erfindungsgemäßen Deckelteils 1, das sich von der Ausführungsform gemäß Figur 1 dadurch unterscheidet, dass die Entgasungskanäle 4, 5 weiter auseinander liegend angeordnet sind und dementsprechend auch die Reihen 8, 9 der Einfüllöffnungen 2, 3 weiter auseinander liegen. Entsprechend liegen auch die Entgasungsöffnungen der Entgasungskanäle 4, 5 an der Stelle, an der sie in die Aufnahmekammern 6 münden, weiter auseinander. Um dennoch die Aufnahmekammer 6 einfach und schnell mit einem einzigen Zündschutzfritteneinsatz versehen zu können, ist in der Figur 5 eine Ausführungsform der Aufnahmekammer 6 sowie eines dazu passenden Zündschutzfritteneinsatzes 12 dargestellt, der eine längliche Form hat. Die Aufnahmekammer 6 sowie der Zündschutzfritteneinsatz 12 weisen eine Breite b auf, die größer ist als eine Höhe h und zusätzlich größer als der Durchmesser der einzusetzenden Zündschutzfritte 13.

Statt der in den Ausführungsbeispielen dargestellten zwei Reihen 8, 9 von Einfüllöffnungen 2, 3 können selbstverständlich auch mehr als zwei Reihen vorgesehen sein.

## Patentansprüche

1. Deckelteil (1) eines elektrochemischen Akkumulators (40), das dazu eingerichtet ist, eine obere Abdeckung des Gehäuses (1, 30) des Akkumulators (40) zu bilden, wobei das Deckelteil (1) mehrere mit Verschlussstopfen zu verschließende Einfüllöffnungen (2, 3) zum Einfüllen von flüssigem Elektrolyten in das Gehäuse aufweist, **dadurch gekennzeichnet, dass** die Einfüllöffnungen (2, 3) in wenigstens zwei nebeneinander liegenden Reihen (8, 9) versetzt zueinander angeordnet sind.

2. Deckelteil nach Anspruch 1, **dadurch gekennzeichnet, dass** die Verschlussstopfen verschiedener Reihen (8, 9) von Einfüllöffnungen (2, 3) quer zur Erstreckungsrichtung der Reihen (8, 9) betrachtet überlappend angeordnet sind, wenn die Verschlussstopfen in die Einfüllöffnungen (2, 3) eingesetzt sind.

3. Deckelteil nach Anspruch 1 oder 2, **dadurch gekennzeichnet, dass** die Verschlussstopfen verschiedener Reihen (8, 9) von Einfüllöffnungen (2, 3) in Erstreckungsrichtung der Reihen (8, 9) betrachtet überlappend angeordnet sind, wenn die Verschlussstopfen in die Einfüllöffnungen (2, 3) eingesetzt sind.

4. Deckelteil nach einem der vorhergehenden Ansprüche, **dadurch gekennzeichnet, dass** das Deckelteil (1) eingerichtet ist zur Anbringung auf einem Gehäuseunterteil (30), das eine Vielzahl von sich quer zur Erstreckungsrichtung der Reihen (8, 9) der Einfüllöffnungen (2, 3) längserstreckenden Zellwände (31) aufweist, durch die in einer einzigen Reihe angeordnete voneinander getrennte Zellgefäße (32) in dem Gehäuseunterteil (30) gebildet sind.

5. Deckelteil nach einem der vorhergehenden Ansprüche, **dadurch gekennzeichnet, dass** die Einfüllöffnungen (2, 3) mit einem oder mehreren in dem Deckelteil (1) verlaufenden Entgasungskanälen (4, 5) verbunden sind, wobei der oder die Entgasungskanäle (4, 5) in eine oder mehrere Gasauslassöffnungen (6) des Deckelteils (1) münden, die für ein Auslassen sich im Akkumulatorinneren bildender Gase über den oder die Entgasungskanäle (4, 5) eingerichtet sind

6. Deckelteil nach Anspruch 5, **dadurch gekennzeichnet, dass** der Entgasungskanal (4, 5) im Wesentlichen zentral durch die mit dem Entgasungskanal (4, 5) verbundenen Einfüllöffnungen (2, 3) verläuft.

7. Deckelteil nach einem der Ansprüche 5 bis 6, **dadurch gekennzeichnet, dass** Einfüllöffnungen (2, 3) verschiedener Reihen (8, 9) über einen gemeinsamen Entgasungskanal miteinander verbunden sind.

8. Deckelteil nach Anspruch 7, **dadurch gekennzeichnet, dass** der gemeinsame Entgasungskanal die damit verbundenen Einfüllöffnungen (2, 3) tangential schneidet.

9. Deckelteil nach einem der Ansprüche 5 bis 8, **dadurch gekennzeichnet, dass** unterschiedliche Reihen (8, 9) von Einfüllöffnungen (2, 3) jeweils eigene durchgehende Entgasungskanäle (4, 5) aufweisen, die in separaten Entgasungsöffnungen münden.

10. Deckelteil nach einem der Ansprüche 5 bis 9, **dadurch gekennzeichnet, dass** die Entgasungsöffnungen im Deckelteil (1) in eine gemeinsame Aufnahmekammer (6) für einen Zündschutzfritteneinsatz (12) münden.

11. Deckelteil nach einem der Ansprüche 5 bis 10, **dadurch gekennzeichnet, dass** benachbarte Reihen (8, 9) von Einfüllöffnungen (2, 3) jeweils eigene, benachbarte Entgasungskanäle (4, 5) aufweisen, die in einem Abstand voneinander verlaufen, der nicht größer ist als der Durchmesser einer Aufnahmekammer (6) für einen Zündschutzfritteneinsatz (12).

12. Deckelteil nach einem der Ansprüche 10 oder 11, **dadurch gekennzeichnet, dass** die Aufnahmekammer (6) für einen Zündschutzfritteneinsatz (12) als längliche Kammer ausgebildet ist, deren Breite (b) größer als die Höhe (h) und größer als der Durchmesser der einzusetzenden Zündschutzfritte (13) ist.

13. Deckelteil nach einem der Ansprüche 5 bis 12, **dadurch gekennzeichnet, dass** benachbarte Entgasungskanäle (4, 5) parallel zueinander verlaufen.

14. Akkumulator (40) mit einem Deckelteil (1) nach einem der vorhergehenden Ansprüche, das auf einem Gehäuseunterteil (30) des Akkumulators (40) befestigt ist.

## Claims

1. A cover section (1) of an electrochemical accumulator (40) adapted to form an upper covering of the housing (1, 30) of the accumulator (40), wherein the cover section (1) comprises a plurality of filler openings (2, 3) closed by plugs for filling the housing with liquid electrolyte, **characterized in that** the filler openings (2, 3) are arranged offset from one another in at least two adjacent rows (8, 9).

2. The cover section according to claim 1, **characterized in that** the plugs of different rows (8, 9) of filler openings (2, 3) are arranged in overlapping manner as seen transverse to the direction of extension of the rows (8, 9) when the plugs are inserted in the filler openings (2, 3).

3. The cover section according to claim 1 or 2, **characterized in that** the plugs of different rows (8, 9) of filler openings (2, 3) are arranged in overlapping manner as seen in the direction of extension of the rows (8, 9) when the plugs are inserted in the filler openings (2, 3).

4. The cover section according to any one of the preceding claims, **characterized in that** the cover section (1) is adapted to be attached to a lower housing section (30) having a plurality of cell walls (31) extending longitudinally transverse to the direction of extension of the rows (8, 9) of filler openings (2, 3) by means of which cell containers (32) arranged in a single row and separated from one another are formed in the lower housing section (30).

5. The cover section according to any one of the preceding claims, **characterized in that** the filler openings (2, 3) are connected to one or more degassing ducts (4, 5) extending into the cover section (1), wherein the one or more degassing ducts (4, 5) open into one or more gas outlet openings (6) of the cover section (1) which are adapted to vent the gases formed within the accumulator via the one or more degassing ducts (4, 5).

6. The cover section according to claim 5, **characterized in that** the degassing duct (4, 5) runs substantially centrally through the filler openings (2, 3) connected to the degassing duct (4, 5).

7. The cover section according to claim 5 or 6, **characterized in that** filler openings (2, 3) of various rows (8, 9) are connected together by means of a common degassing duct.

8. The cover section according to claim 7, **characterized in that** the common degassing duct tangentially intersects the connected filler openings (2, 3).

9. The cover section according to any one of claims 5 to 8, **characterized in that** different rows (8, 9) of filler openings (2, 3) have their own respective continuous degassing ducts (4, 5) which open into separate degassing openings.

10. The cover section according to any one of claims 5 to 9, **characterized in that** the degassing openings in the cover section (1) open into a common receiving chamber (6) for a frit ignition protection insert (12).

11. The cover section according to any one of claims 5 to 10, **characterized in that** adjacent rows (8, 9) of filler openings (2, 3) each have their own respective adjacent degassing ducts (4, 5) extending at a distance from one another which is no greater than the diameter of a receiving chamber (6) for a frit ignition protection insert (12).

12. The cover section according to one of claims 10 or 11, **characterized in that** the receiving chamber (6) for a frit ignition protection insert (12) is configured as an elongated chamber having a width (b) greater than the height (h) and greater than the diameter of the frit ignition protection (13) to be used.

13. The cover section according to any one of claims 5 to 12, **characterized in that** adjacent degassing ducts (4, 5) extend parallel to one another.

14. An accumulator (40) comprising a cover section (1) in accordance with any one of the preceding claims which is attached to a lower housing section (30) of said accumulator (40).

## Revendications

1. Partie formant couvercle (1) d'un accumulateur électrochimique (40), qui est conçue pour former une couverture supérieure du boîtier (1, 30) de l'accumulateur (40), ladite partie formant couvercle (1) comportant plusieurs ouvertures de remplissage (2, 3) à refermer avec des bouchons de fermeture et destinées au remplissage d'électrolytes liquides dans le boîtier, **caractérisée en ce que** les ouvertures de remplissage (2, 3) sont agencées de façon décalée les unes par rapport aux autres dans au moins deux rangées (8, 9) situées l'une à côté de l'autre.

2. Partie formant couvercle (1) selon la revendication 1, **caractérisée en ce que** les bouchons de fermeture de rangées différentes (8, 9) d'ouvertures de remplissage (2, 3) sont agencés de manière à se chevaucher quand on les observe perpendiculairement à la direction d'extension des rangées (8, 9) quand les bouchons de fermeture sont mis en place dans les ouvertures de remplissage (2, 3).

3. Partie formant couvercle selon la revendication 1 ou 2, **caractérisée en ce que** les bouchons de fermeture de rangées différentes (8, 9) d'ouvertures de remplissage (2, 3) sont agencés de manière à se chevaucher quand on les observe dans la direction d'extension des rangées (8, 9) quand les bouchons de fermeture sont mis en place dans les ouvertures de remplissage (2, 3).

4. Partie formant couvercle selon l'une des revendications précédentes, **caractérisée en ce que** la partie formant couvercle (1) est conçue pour être rapportée sur une partie inférieure de boîtier (30) qui comporte une pluralité de parois cellulaires (31) qui s'étendent transversalement à la direction d'extension des rangées (8, 9) des ouvertures de remplissage (2, 3), parois au moyen desquelles des récipients cellulaires (32) agencés dans une rangée unique et séparés les uns des autres sont formés dans la partie inférieure de boîtier (30).

5. Partie formant couvercle selon l'une des revendications précédentes, **caractérisée en ce que** les ouvertures de remplissage (2, 3) sont reliées avec un ou plusieurs canaux de dégazage (4, 5) s'étendant dans la partie formant couvercle (1),
dans laquelle le ou les canaux de dégazage (4, 5) débouchent dans une ou plusieurs ouvertures de sortie de gaz (6) de la partie formant couvercle (1), qui sont conçues pour laisser sortir, via le ou les canaux de dégazage (4, 5), les gaz qui se forment à l'intérieur de l'accumulateur.

6. Partie formant couvercle selon la revendication 5, **caractérisée en ce que** le canal de dégazage (4, 5) s'étend sensiblement de manière centrale à travers les ouvertures de remplissage (2, 3) reliées au canal de dégazage (4, 5).

7. Partie formant couvercle selon l'une des revendications 5 à 6, **caractérisée en ce que** les ouvertures de remplissage (2, 3) de différentes rangées (8, 9) sont reliées les unes aux autres via un canal de dégazage commun.

8. Partie formant couvercle selon la revendication 7, **caractérisée en ce que** le canal de dégazage commun recoupe tangentiellement les ouvertures de remplissage (2, 3) qui lui sont reliées.

9. Partie formant couvercle selon l'une des revendications 5 à 8, **caractérisée en ce que** différentes rangées (8, 9) d'ouvertures de remplissage (2, 3) comportent respectivement des propres canaux de dégazage traversants (4, 5) qui débouchent dans des ouvertures de dégazage séparées.

10. Partie formant couvercle selon l'une des revendications 5 à 9, **caractérisée en ce que** les ouvertures de dégazage dans la partie formant couvercle (1) débouchent dans une chambre de réception commune (6) pour un insert fritté anti-explosion (12).

11. Partie formant couvercle selon l'une des revendications 5 à 10, **caractérisée en ce que** des rangées voisines (8, 9) d'ouvertures de remplissage (2, 3) comportent respectivement des propres canaux de dégazage voisins (4, 5), qui s'étendent les uns des autres à une distance qui n'est pas plus grande que le diamètre d'une chambre de réception (6) pour un insert fritté anti-explosion (12).

12. Partie formant couvercle selon l'une des revendications 10 ou 11, **caractérisée en ce que** la chambre de réception (6) pour un insert fritté anti-explosion (12) est réalisée sous forme de chambre allongée dont la largeur (b) est plus grande que la hauteur (h) et plus grande que le diamètre de l'élément fritté anti-explosion (13) à insérer.

13. Partie formant couvercle selon l'une des revendications 5 à 12, **caractérisée en ce que** des canaux de dégazage voisins (4, 5) s'étendent parallèlement les uns aux autres.

14. Accumulateur (40) comprenant une partie formant couvercle (1) selon l'une des revendications précédentes, qui est fixée sur une partie inférieure de boîtier (30) de l'accumulateur (40).
